# EUROPEAN PATENT SPECIFICATION

(11) **EP 3 129 686 B1**
(45) Date of publication and mention of the grant of the patent: **14.03.2018**
(21) Application number: 15713969.2
(22) Date of filing: 23.03.2015
(51) Int. Cl.: F16K 3/02, F16K 3/32, F16K 1/52, F16K 3/12, F16K 31/56

(54) **FLOW CONTROL VALVE AND METHOD FOR OPERATING A FLOW CONTROL VALVE**
STRÖMUNGSVENTIL UND VERFAHREN ZUM BETRIEB EINES STRÖMUNGSVENTILS
VANNE DE COMMANDE D'ÉCOULEMENT ET PROCÉDÉ POUR ACTIONNER UNE VANNE DE COMMANDE D'ÉCOULEMENT

(30) Priority: 11.04.2014 FI 20145348
(43) Date of publication of application: 15.02.2017
(73) Proprietor: Wärtsilä Finland Oy, 65380 Vaasa (FI)
(72) Inventor: TUOMAINEN, Antti, FI-65100 Vaasa (FI); LAAKSO, Ossi, FI-65100 Vaasa (FI)
(74) Representative: Berggren Oy, Helsinki & Oulu
(86) International application number: PCT/FI2015/050192
(87) International publication number: WO 2015/155407

(56) References cited:
- EP-A1- 2 497 984
- GB-A- 1 248 958
- US-A- 2 197 995
- US-A- 4 531 539
- US-A- 6 045 671
- US-A1- 2012 056 114
- US-A1- 2012 273 228

## Description

### Technical field of the invention

The present invention relates to a flow control valve in accordance with the preamble of claim 1. The invention also concerns a method of operating a flow control valve as defined in the preamble of the other independent claim.

### Background of the invention

In certain applications it is important to be able to precisely control the flow rate of a fluid in addition to the ability to simply open and close the flow connection. One example of such a system is the fuel injection system of an engine that is operated on a gaseous fuel. Each cylinder of a gas engine is typically provided with a gas admission valve, which controls the fuel flow into an intake duct. During the intake stroke, the gas admission valve is opened for introducing gaseous fuel into the intake duct. Before the end of the intake stroke, the valve must be closed for preventing flow into the exhaust duct during the scavenging period. The power of the engine is controlled by the amount of the fuel that is introduced into the cylinders, and precise control of the fuel amount is thus needed. In present systems, the control of the fuel amount is usually implemented by controlling the duration of the time the gas admission valves are kept open. Also the pressure of the gas affects the amount of the fuel that is introduced into the cylinders during each cycle. The gas admission valves presently used in engines provide an accurate control within a narrow load range. However, when the engine load is low, it is difficult to accurately control the amount of the gaseous fuel that is introduced into the cylinders.

Another example of an application where it would be desirable to be able to precisely control both the flow rate and the opening and closing timing of a valve is the operation of an air by-pass valve of a turbocharged internal combustion engine, which controls the pressure of an intake air receiver by releasing intake air into an exhaust duct. Similar properties are required from waste gate valves, which regulate the maximum charge pressure in turbocharger systems by allowing part of the exhaust gas to by-pass the turbine of a turbocharger. There are also many other applications where accurate control of flow rate and opening and closing timing of a valve is needed.

An on/off function typically requires a fast-acting valve, whereas in flow rate regulation precise control is more important than the response time of the valve. These properties are difficult and expensive to include in a single valve.

GB1248958 discloses a flow control valve according to the preamble of claims 1 and 11. The flow control valve comprises two positioning means and a single movable valve member.

US2012/0056114 discloses a flow control valve with two movable valve members and two positioning means.

### Summary of the invention

An object of the present invention is to provide an improved flow control valve, which has both a flow rate regulating function and an on/off function. The characterizing features of the flow control valve according to the invention are given in the characterizing part of claim 1. Another object of the invention is to provide an improved method for operating a flow control valve comprising a valve body and having a first flow regulating surface and a second flow regulating surface facing the first flow regulating surface, the distance between the first flow regulating surface and the second flow regulating surface determining the smallest cross-sectional flow area through the flow control valve. The characterizing features of the method are given in the characterizing part of the other independent claim.

The flow control valve according to the invention comprises a valve body having an inlet and an outlet, a linearly movable valve member, which comprises a first flow regulating surface arranged inside the valve body, and a second flow regulating surface arranged inside the valve body and facing the first flow regulating surface, the first flow regulating surface and the second flow regulating surface being arranged so that the movement of the valve member changes linearly the cross-sectional flow area between the first flow regulating surface and the second flow regulating surface. The flow control valve further comprises first positioning means, which are configured to move the valve member for adjusting the distance between the first flow regulating surface and the second flow regulating surface, and second positioning means, which are configured to switch the valve member or the second flow regulating surface between a closed position, where the first flow regulating surface is against the second flow regulating surface, and an open position, where the distance between the first flow regulating surface and the second flow regulating surface depends on the latest position of the valve member determined by the first positioning means.

The flow control valve thus provides a linear control of the flow rate through the valve. Because of the two sets of positioning means, the on/off function and the flow rate regulating function of the flow control valve can work independently of each other. It is thus easier to optimize the flow control valve to have a quick response time for opening and closing of the valve and precise control of the flow rate.

According to the invention, the flow control valve comprises a second movable valve member comprising the second flow regulating surface, and the second positioning means are configured to switch the second valve member between the closed position and the open position.

In the method for operating the flow control valve, the flow control valve is operated by using a flow rate regulating function by moving the first flow regulating surface linearly relative to the valve body to adjust the distance between the first flow regulating surface and the second flow regulating surface for changing the cross-sectional flow area between the first flow regulating surface and the second flow regulating surface in an open position of the flow control valve, and by using an on/off function by switching the position of the first flow regulating surface or the second flow regulating surface between a closed position, in which position the flow regulating surfaces are brought together for preventing flow through the flow control valve, and an open position, in which position the distance between the first flow regulating surface and the second flow regulating surface depends on the latest distance determined by the flow rate regulating function.

### Brief description of the drawings

Embodiments of the invention are described below in more detail with reference to the accompanying drawings, in which
Fig. 1 shows a cross-sectional view of a flow control valve according to an embodiment of the invention with a minimum flow rate setting,
Fig. 2 shows the valve of Fig. 1 with a maximum flow rate setting,
Fig. 3 shows the valve of Fig. 2 in a closed position,
Fig. 4 shows a flow control valve with an actuator,
Fig. 5 shows a flow control valve with differently arranged actuators, and
Fig. 6 shows a flow control valve which does not form part of the claimed invention and has only one movable valve member.

### Description of embodiments of the invention

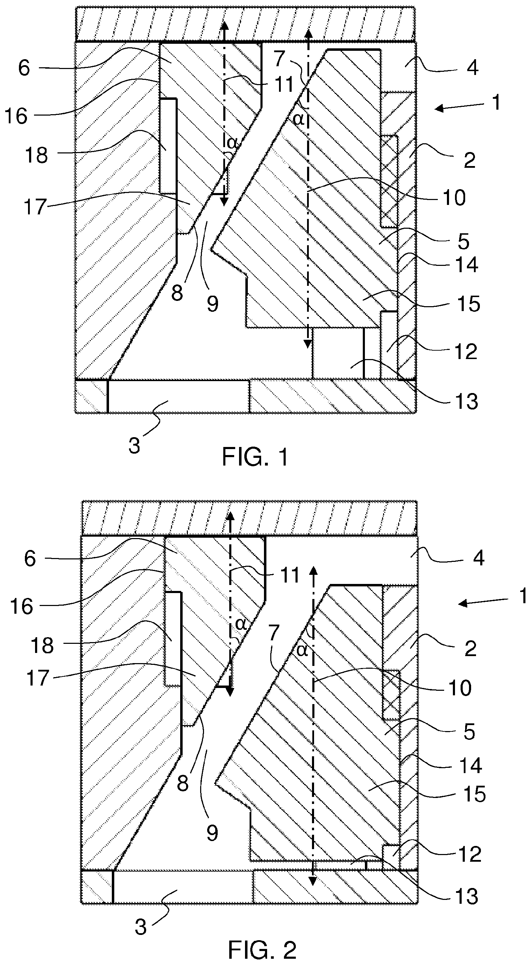

Figures 1 to 5 show simplified cross-sectional views of flow control valves 1 according to different embodiments of the invention. The flow control valve 1 is suitable for controlling the flow rate of a fluid, which can be gas or liquid, in any application that requires, in addition to the flow rate control function, also an on/off-function for selectively preventing and allowing flow through the valve 1. The flow rate is controlled by changing the cross-sectional flow area through the valve 1, but depends also on the pressure of the fluid. The flow control valve 1 could be used, for instance, in a piston engine, especially in a large internal combustion engine, such as a main or an auxiliary engine of a ship or an engine that is used at a power plant for producing electricity. The flow control valve 1 according to the invention is suitable, in particular, for controlling the injection of gaseous fuel into an intake duct of a gas engine. The flow control valve 1 could also be used as a waste gate valve of an engine for controlling the exhaust gas flow by-passing a turbine of a turbocharger, or as an air by-pass valve for controlling the pressure of an intake air receiver.

The flow control valve 1 comprises a valve body 2 having an inlet 3 for introducing fluid into the valve body 2 and an outlet 4 for discharging the fluid from the valve body 2 and for distributing it further in the system where the flow control valve 1 is used. In the embodiments of the figures, the valve body 2 is rectangular, but it could also have some other shape. For regulating the flow rate through the flow control valve 1, the flow control valve 1 is provided with a first flow regulating surface 7 and a second flow regulating surface 8. The flow regulating surfaces 7, 8 are planar and face each other. However, the flow regulating surfaces 7, 8 could also have some other shape. In the embodiments of the figures, the second flow regulating surface 8 is parallel to the first flow regulating surface 7. Each flow regulating surface 7, 8 extends from one side wall of the flow control valve 1 to the opposite side wall. The cross-sectional flow area between the first flow regulating surface 7 and the second flow regulating surface 8 is determined by the distance between the two flow regulating surfaces 7, 8. Since the flow regulating surfaces 7, 8 are planar and parallel to each other, the flow area changes linearly as the distance between the flow regulating surfaces 7, 8 changes. A linear control could also be achieved with flow regulating surfaces 7, 8 that are not planar and parallel to each other. All the fluid flowing through the flow control valve 1 flows through the gap 9 that is formed between the first flow regulating surface 7 and the second flow regulating surface 8. The cross-sectional areas of the inlet 3, the outlet 4 and any part of the fluid passage between the inlet 3 and the outlet 4 are determined so that the cross-sectional flow area between the flow regulating surfaces 7, 8 determines the smallest cross-sectional flow area through the flow control valve 1. The flow rate is thus linearly changed over the whole flow rate range of the flow control valve 1.

The flow control valve 1 comprises a first movable valve member 5. The first valve member 5 is arranged inside the valve body 2 and can be moved linearly. The first flow regulating surface 7 forms part of the first valve member 5. The first valve member 5 is a wedge-shaped part tapering towards the outlet 4 of the flow control valve 1. The first flow regulating surface 7 forms an inclined front surface of the first valve member 5. The backside 14 and the sides 15 of the first valve member 5 are in contact with the walls of the valve body 2. The first valve member 5 does not need to be in direct contact with the walls of the valve body 2, but the flow control valve 1 can be provided with seals that are arranged between the valve body 2 and the first valve member 5. The first flow regulating surface 7 is at an angle α in relation to the moving direction of the first valve member 5, which is represented by arrow 10. The angle α is between 20 to 70 degrees.

The flow control valves 1 of figures 1 to 5 also comprise a second movable valve member 6. Also the second valve member 6 is arranged inside the valve body 2 and can be moved linearly. The second valve member 6 is a wedge-shaped part tapering towards the inlet 3 of the flow control-valve 1. The second flow regulating surface 8 forms part of the second valve member 6. The second flow regulating surface 8 forms an inclined front surface of the second valve member 6. The sides 17 and the backside 16 of the second valve member 6 are in contact with the walls of the valve body 2. The flow control valve 1 can be provided with seals that are arranged between the second valve member 6 and the valve body 2. The moving direction 11 of the second valve member 6 is the same as the moving direction 10 of the first valve member 5. Since the second flow regulating surface 8 is parallel to the first flow regulating surface 7, the angle α between the moving direction 11 of the second valve member 6 and the second flow regulating surface 8 is the same as the angle α between the moving direction 10 of the first valve member 5 and the first flow regulating surface 7. The angle α between the flow regulating surface 7, 8 and the moving direction 10, 11 of the valve member 5, 6 determines how sensitively the flow area between the flow regulating surfaces 7, 8 responds to the movements of the valve members 5, 6. The smaller the angle α is, the greater movement of a valve member 5, 6 is needed for achieving a certain change in the flow area. A smaller angle α thus means more accurate control of the flow rate, but slower response to a changing flow demand.

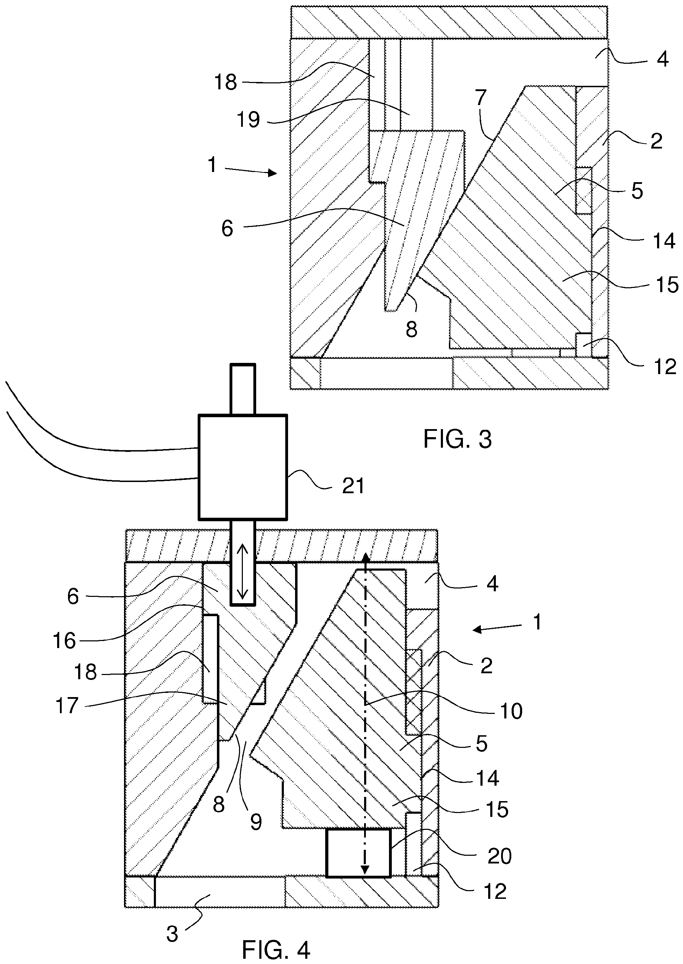

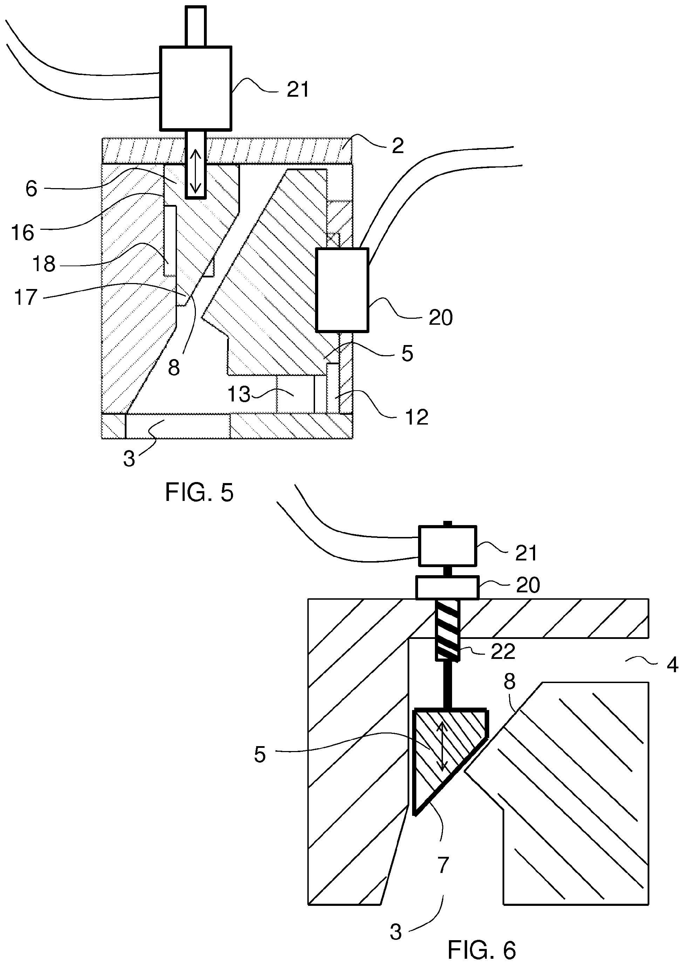

The first valve member 5 is used for steplessly regulating the flow rate through the flow control valve 1. The flow control valve 1 is provided with a first actuator 20, which is configured to move the first valve member 5. The first actuator 20 thus works as first positioning means for adjusting the distance between the first flow regulating surface 7 and the second flow regulating surface 8. The actuator 20 can be, for instance, a hydraulic or a pneumatic actuator comprising a cylinder and a piston. Instead of a pneumatic or a hydraulic actuator, the actuator 20 could be electrical. For example, the actuator 20 could be a solenoid or piezoelectric actuator, or the actuator 20 could comprise an electric motor, of which rotating motion is transformed into a linear motion by a cam, a lever system, or a lead screw. The actuator 20 could also be completely mechanical. In the embodiment of figure 4, the first actuator 20 is arranged inside the valve body 2 and below the first valve member 5 in the moving direction 10 of the first valve member 5. In the embodiment of figure 5, the first actuator 20 is arranged on the backside of the first valve member 5. The first actuator 20 should be able to provide a precise control of the movements of the first valve member 5 to allow accurate control of the flow rate. The required moving speed of the first valve member 5 depends on the application, but in many applications, such as in a fuel injection system of a large piston engine, the first valve member 5 can move relatively slowly. The flow control valve 1 is provided with a guide rail 12 and a guide groove 13, which are arranged inside the valve body 2 for guiding the movement of the first valve member 5 and thus work as guide means. The guide rail 12 is on the backside of the first valve member 5 and the guide groove 13 is on the side of the first valve member 5. The opposite side can be provided with a similar guide groove. The first valve member 5 is provided with suitable mating surfaces cooperating with the guide rail 12 and the guide groove 13. In the embodiment of the figures, the guide rail 12 is arranged between the first valve member 5 and a wall of the valve body 2. However, the first valve member 5 could also be arranged to move along a guide rail 12, which goes through the first valve member 5. The flow control valve 1 can be provided with suitable stopper surfaces for limiting the movement of the first valve member 5 between a maximum flow rate position shown in figure 2 and a minimum flow rate position shown in figure 1. The movement range of the first valve member 5 could also be limited by the actuator 20. The flow control valve 1 can be provided with suitable seals between the first valve member 5 and the valve body 2.

The second valve member 6 is used as a closing means for opening and closing the fluid communication between the inlet 3 and the outlet 4 of the flow control valve 1. The flow control valve 1 is provided with a second actuator 21, which is arranged to move the second valve member 6. The second actuator 21 works as second positioning means, which switches the flow control valve 1 between an open position and a closed position. The actuator options listed above for the actuator 20 of the first valve member 5 are also suitable for the second valve member 6. However, since the flow rate through the flow control valve 1 is steplessly controlled by the first valve member 5, the movement of the second valve member 6 does not need to be accurately controlled, but the second actuator 21 may be optimized for providing a quick actuation of the second valve member 6. The second actuator 21 can be an on/off type actuator. The second valve member 6 is moved between an open position and a closed position. The open position of the second valve member 6 is fixed and shown in figures 1 and 2. In the open position, the second valve member 6 is retracted into a position maximizing the distance between the first flow regulating surface 7 and the second flow regulating surface 8. The distance and the flow area between the first flow regulating surface 7 and the second flow regulating surface 8 depends on the position of the first valve member 5. The actuation of the second valve member 6 does not affect the position of the first valve member 5.

The closed position of the second valve member 6 depends on the position of the first valve member 5. The closed position of the second valve member 6 with the maximum flow rate setting of the flow control valve 1 is shown in figure 3. When the maximum flow rate setting is in use, the second valve member 6 has to move a longer distance from the open position to the closed position than in a situation when the minimum flow rate setting is in use. In the closed position, the second flow regulating surface 8 is arranged against the first flow regulating surface 7. The first flow regulating surface 7 and/or the second flow regulating surface 8 can be provided with a seal. The second actuator 21 is configured to provide a sufficient force for keeping the second valve member 6 in the closed position, or the flow control valve 1 can be provided with separate retaining means, which are arranged to keep the second valve member 6 in the closed position even when there is a pressure difference over the flow control valve 1. The closing movement of the second valve member 6 can be provided by a passive device, such as a spring, which is arranged to push the second valve member 6 towards the first valve member 5. The opening movement can be implemented, for instance, by a solenoid, which can create a force exceeding the closing force of the passive closing device. Alternatively, the opening movement can be provided by a passive device and the closing movement is implemented by an active device. The flow control valve 1 is provided with a second guide rail 18 and a second guide groove 19, which are arranged inside the valve body 2 for guiding the movement of the second valve member 6. The second valve member 6 is provided with suitable mating surfaces cooperating with the second guide rail 18 and the second guide groove 19. The second guide rail 18 and the second guide groove 19 are similar to the guide rail 12 and the guide groove 13 that are provided for the first valve member 5.

The flow rate setting of the flow control valve 1 can be changed also when the valve 1 is closed. The second valve member 6 is arranged to follow the movement of the first valve member 5 and keep the flow control valve 1 closed even when the first valve member 5 is moved for changing the flow rate setting. When the second valve member 6 is switched to the open position, the flow area between the first and the second flow regulating surfaces 7, 8 corresponds to the setting that was selected by moving the first valve member 5 when the flow control valve 1 was closed. The first valve member 5 and the second valve member 6 can be moved even simultaneously for changing the flow rate setting and for opening or closing the flow control valve 1 at the same time.

Because the flow rate regulation and the on/off function of the flow control valve 1 are implemented by using separate positioning means 20, 21, the operation of the positioning means 20, 21 can be easily optimized. The flow control valve 1 can thus provide both a quick response time and accurate flow rate regulation. Also the masses of the moving parts of the flow control valve 1 can be optimized and the dynamic behavior of the flow control valve 1 can thus be improved. In an embodiment not forming part of the claimed invention, instead of being arranged in the second movable valve member 6, the second flow regulating surface 8 could be a fixed surface. In that case, the second positioning means 21 should be configured to switch the first valve member 5 between an open position and a closed position. For instance, the first valve member 5 could be provided with two actuators, a first actuator being configured to provide the flow regulation and a second actuator being configured to provide the on/off function. Figure 6 shows such an embodiment, where only the first flow regulating surface 7 is movable. The first flow regulating surface 7 is arranged in a first valve member 5 and the second flow regulating surface 8 is a fixed surface. In the embodiment of figure 6, the first valve member 5 is arranged above the second flow regulating surface 8. The flow control valve 1 comprises a positioning means 20 for precisely adjusting the flow rate and an actuator 21 functioning as an on/off device for providing quick closing and opening of the flow control valve 1. Both the positioning means 20 and the actuator 21 are arranged to move the first valve member 5. The positioning means 20 in the embodiment of figure 6 comprise a screw 22 for defining the maximum distance between the first flow regulating surface 7 and the second flow regulating surface 8. The actuator 21 can be, for instance, an electrical or hydraulic device that is capable of moving the first valve member 5 between a closed position and an open position. When the flow control valve 1 is closed, the actuator 21 moves the first valve member 5 against the second flow regulating surface 8. When the flow control valve 1 is opened, the actuator 21 moves the first valve member 5 to a retracted position determined by the screw 22 of the positioning means 20. In the open position of the flow control valve 1, rotation of the screw 22 moves the first valve member 5 and changes the flow area between the flow regulating surfaces 7, 8.

It will be appreciated by a person skilled in the art that the invention is not limited to the embodiments described above, but may vary within the scope of the appended claims.

## Claims

1. A flow control valve (1) comprising
- a valve body (2) having an inlet (3) and an outlet (4),
- a linearly movable first valve member (5), which comprises a first flow regulating surface (7) arranged inside the valve body (2),
- a second flow regulating surface (8) arranged inside the valve body (2) and facing the first flow regulating surface (7),
- first positioning means (20), which are configured to move the first valve member (5) for adjusting the distance between the first flow regulating surface (7) and the second flow regulating surface (8), thereby providing a flow rate regulating function, and
- second positioning means (21),
**characterized in that** the flow control valve (1) comprises a second movable valve member (6) comprising the second flow regulating surface (8) and that
- the second positioning means (21) are configured to switch the second valve member (6) between a closed position, where the first flow regulating surface (7) is against the second flow regulating surface (8), and an open position, where the distance between the first flow regulating surface (7) and the second flow regulating surface (8) depends on the latest position of the first valve member (5) determined by the first positioning means (20) and that
- the first flow regulating surface (7) and the second flow regulating surface (8) are arranged so that the movement of the first valve member (5) changes linearly the cross-sectional flow area between the first flow regulating surface (7) and the second flow regulating surface (8).

2. A flow control valve (1) according to claim 1, **characterized in that** the first and the second flow regulating surfaces (7, 8) are planar.

3. A flow control valve (1) according to claim 2, **characterized in that** the second flow regulating surface (8) is arranged in parallel with the first flow regulating surface (7).

4. A flow control valve (1) according to any of the preceding claims, **characterized in that** the first positioning means (20) comprise an actuator.

5. A flow control valve (1) according to any of the preceding claims, **characterized in that** the second positioning means (21) comprise an actuator.

6. A flow control valve (1) according to any of the preceding claims, **characterized in that** the second positioning means (21) comprise a passive device for creating a closing force for switching the flow control valve (1) to the closed position or for creating an opening force for switching the flow control valve (1) to the open position.

7. A flow control valve (1) according to claim 6, **characterized in that** the passive device is a spring.

8. A flow control valve (1) according to any of the preceding claims, **characterized in that** the flow control valve (1) comprises a guide means (12, 13, 18, 19) for guiding the first valve member (5) and/or the second valve member (6).

9. A flow control valve (1) according to claim 8, **characterized in that** the guide means (12, 13, 18, 19) comprise a guide rail (12, 18) and/or guide groove (13, 19).

10. A flow control valve (1) according to any of the preceding claims, **characterized in that** the first flow regulating surface (7) is at an angle of 20 to 70 degrees in relation to the moving direction (10) of the first valve member (5).

11. A method for operating a flow control valve (1) comprising a valve body (2) and having a first flow regulating surface (7) and a second flow regulating surface (8) facing the first flow regulating surface (7), the distance between the first flow regulating surface (7) and the second flow regulating surface (8) determining the smallest cross-sectional flow area through the flow control valve (1), wherein the flow control valve (1) is operated
- by using a flow rate regulating function by moving a first valve member (5) comprising the first flow regulating surface (7) linearly relative to the valve body (2) to adjust the distance between the first flow regulating surface (7) and the second flow regulating surface (8) for changing the cross-sectional flow area between the first flow regulating surface (7) and the second flow regulating surface (8) in an open position of the flow control valve (1), and
- by using an on/off function by switching the flow control valve (1) between a closed position, in which position the flow regulating surfaces (7, 8) are brought together for preventing flow through the flow control valve (1), and an open position, in which position the distance between the first flow regulating surface (7) and the second flow regulating surface (8) depends on the latest distance determined by the flow rate regulating function,
**characterized in that** in the on/off function a second valve member (6) comprising the second flow regulating surface (8) is moved.

12. A method according to claim 11, **characterized in that** in the flow rate regulating function the distance between the first flow regulating surface (7) and the second flow regulating surface (8) is adjusted by using first positioning means (20), and in the on/off function the switch between the closed position and the open position is implemented by using second positioning means (21).

## Patentansprüche

1. Strömungsregelventil (1), das Folgendes umfasst:
- einen Ventilkörper (2) mit einem Einlass (3) und einem Auslass (4),
- ein linear bewegliches erstes Ventilelement (5), das eine erste Strömungsregulierfläche (7) umfasst, die im Inneren des Ventilkörpers (2) angeordnet ist,
- eine zweite Strömungsregulierfläche (8), die im Inneren des Ventilkörpers (2) angeordnet und der ersten Strömungsregulierfläche (7) zugewandt ist,
- erste Positionierungsmittel (20), die konfiguriert sind, um das erste Ventilelement (5) zum Anpassen des Abstands zwischen der ersten Strömungsregulierfläche (7) und der zweiten Strömungsregulierfläche (8) zu bewegen, wodurch eine Strömungsrate-Regulierfunktion bereitgestellt wird, und
- zweite Positionierungsmittel (21),
**dadurch gekennzeichnet, dass** das Strömungsregelventil (1) ein zweites bewegliches Ventilelement (6) umfasst, das die zweite Strömungsregulierfläche (8) umfasst, und dass
- die zweiten Positionierungsmittel (21) konfiguriert sind, um das zweite Ventilelement (6) zwischen einer geschlossenen Position, in der die erste Strömungsregulierfläche (7) gegen die zweite Strömungsregulierfläche (8) anliegt, und einer offenen Position, in der der Abstand zwischen der ersten Strömungsregulierfläche (7) und der zweiten Strömungsregulierfläche (8) von der letzten Position des ersten Ventilelements (5) abhängt, die durch die ersten Positionierungsmittel (20) bestimmt wird, umzuschalten, und dass
- die erste Strömungsregulierfläche (7) und die zweite Strömungsregulierfläche (8) derart angeordnet sind, dass die Bewegung des ersten Ventilelements (5) den Querschnittsströmungsbereich zwischen der ersten Strömungsregulierfläche (7) und der zweiten Strömungsregulierfläche (8) linear verändert.

2. Strömungsregelventil (1) nach Anspruch 1, **dadurch gekennzeichnet, dass** die erste und die zweite Strömungsregulierfläche (7, 8) planar sind.

3. Strömungsregelventil (1) nach Anspruch 2, **dadurch gekennzeichnet, dass** die zweite Strömungsregulierfläche (8) parallel zu der ersten Strömungsregulierfläche (7) angeordnet ist.

4. Strömungsregelventil (1) nach einem der vorhergehenden Ansprüche, **dadurch gekennzeichnet, dass** die ersten Positionierungsmittel (20) einen Stellantrieb umfassen.

5. Strömungsregelventil (1) nach einem der vorhergehenden Ansprüche, **dadurch gekennzeichnet, dass** die zweiten Positionierungsmittel (21) einen Stellantrieb umfassen.

6. Strömungsregelventil (1) nach einem der vorhergehenden Ansprüche, **dadurch gekennzeichnet, dass** die zweiten Positionierungsmittel (21) eine passive Vorrichtung zum Erzeugen einer Schließkraft zum Umschalten des Strömungsregelventils (1) zu der geschlossenen Position oder zum Erzeugen einer Öffnungskraft zum Umschalten des Strömungsregelventils (1) zu der offenen Position umfassen.

7. Strömungsregelventil (1) nach Anspruch 6, **dadurch gekennzeichnet, dass** die passive Vorrichtung eine Feder ist.

8. Strömungsregelventil (1) nach einem der vorhergehenden Ansprüche, **dadurch gekennzeichnet, dass** das Strömungsregelventil (1) ein Führungsmittel (12, 13, 18, 19) zum Führen des ersten Ventilelements (5) und/oder des zweiten Ventilelements (6) umfasst.

9. Strömungsregelventil (1) nach Anspruch 8, **dadurch gekennzeichnet, dass** die Führungsmittel (12, 13, 18, 19) eine Führungsschiene (12, 18) und/oder Führungsnut (13, 19) umfassen.

10. Strömungsregelventil (1) nach einem der vorhergehenden Ansprüche, **dadurch gekennzeichnet, dass** die erste Strömungsregulierfläche (7) in einem Winkel von 20 bis 70 Grad in Bezug auf die Bewegungsrichtung (10) des ersten Ventilelements (5) ist.

11. Verfahren zum Betreiben eines Strömungsregelventils (1), das einen Ventilkörper (2) mit einer ersten Strömungsregulierfläche (7) und einer zweiten Strömungsregulierfläche (8), die der ersten Strömungsregulierfläche (7) zugewandt ist, umfasst, wobei der Abstand zwischen der ersten Strömungsregulierfläche (7) und der zweiten Strömungsregulierfläche (8) den kleinesten Querschnittsströmungsbereich durch das Strömungsregelventil (1) definiert, wobei das Strömungsregelventil (1) wie folgt betrieben wird:
- durch Verwenden einer Strömungsrate-Regulierfunktion durch Bewegen eines ersten Ventilelements (5), das die erste Strömungsregulierfläche (7) umfasst, linear relativ zu dem Ventilkörper (2), um den Abstand zwischen der ersten Strömungsregulierfläche (7) und der zweiten Strömungsregulierfläche (8) zum Verändern des Querschnittsströmungsbereichs zwischen der ersten Strömungsregulierfläche (7) und der zweiten Strömungsregulierfläche (8) in einer offenen Position des Strömungsregelventils (1) anzupassen, und
- durch Verwenden einer An/Aus-Funktion durch Umschalten des Strömungsregelventils (1) zwischen einer geschlossenen Position, wobei in dieser Position die Strömungsregulierflächen (7, 8) zum Verhindern einer Strömung durch das Strömungsregelventil (1) zusammengebracht werden, und einer offenen Position, wobei in dieser Position der Abstand zwischen der ersten Strömungsregulierfläche (7) und der zweiten Strömungsregulierfläche (8) von dem letzten Abstand abhängt, der durch die Strömungsrate-Regulierfunktion bestimmt wird,
**dadurch gekennzeichnet, dass** in der An/Aus-Funktion ein zweites Ventilelement (6), das die zweite Strömungsregulierfläche (8) umfasst, bewegt wird.

12. Verfahren nach Anspruch 11, **dadurch gekennzeichnet, dass** in der Strömungsrate-Regulierfunktion der Abstand zwischen der ersten Strömungsregulierfläche (7) und der zweiten Strömungsregulierfläche (8) durch Verwenden von ersten Positionierungsmitteln (20) angepasst wird und in der An/Aus-Funktion das Umschalten zwischen der geschlossenen Position und der offenen Position durch Verwenden von zweiten Positionierungsmitteln (21) umgesetzt wird.

## Revendications

1. Vanne de commande d'écoulement (1) comprenant :
- un corps de vanne (2) comportant une entrée (3) et une sortie (4),
- un premier élément de vanne (5) déplaçable linéairement, comprenant une première surface de régulation d'écoulement (7) disposée à l'intérieur du corps de vanne (2),
- une deuxième surface de régulation d'écoulement (8) disposée à l'intérieur du corps de vanne (2) et tournée vers la première surface de régulation d'écoulement (7),
- des premiers moyens de positionnement (20) configurés pour déplacer le premier élément de vanne (5) afin de régler la distance entre la première surface de régulation d'écoulement (7) et la deuxième surface de régulation d'écoulement (8), assurant ainsi une fonction de régulation de débit, et
- des deuxièmes moyens de positionnement (21),
**caractérisée en ce que** la vanne de commande d'écoulement (1) comprend un deuxième élément de vanne (6) déplaçable, comprenant la deuxième surface de régulation d'écoulement (8), et **en ce que**
- les deuxièmes moyens de positionnement (21) sont configurés pour commuter le deuxième élément de vanne (6) entre une position fermée, dans laquelle la première surface de régulation d'écoulement (7) est contre la deuxième surface de régulation d'écoulement (8), et une position ouverte dans laquelle la distance entre la première surface de régulation d'écoulement (7) et la deuxième surface de régulation d'écoulement (8) dépend de la dernière position du premier élément de vanne (5) déterminée par le premiers moyens de positionnement (20), et **en ce que**
- la première surface de régulation d'écoulement (7) et la deuxième surface de régulation d'écoulement (8) sont disposées de telle façon que le déplacement du premier élément de vanne (5) modifie linéairement la section transversale d'écoulement entre la première surface de régulation d'écoulement (7) et la deuxième surface de régulation d'écoulement (8).

2. Vanne de commande d'écoulement (1) selon la revendication 1, **caractérisée en ce que** les première et deuxième surfaces de régulation d'écoulement (7, 8) sont planaires.

3. Vanne de commande d'écoulement (1) selon la revendication 2, **caractérisée en ce que** la deuxième surface de régulation d'écoulement (8) est disposée parallèlement à la première surface de régulation d'écoulement (7).

4. Vanne de commande d'écoulement (1) selon l'une quelconque des revendications précédentes, **caractérisée en ce que** les premiers moyens de positionnement (20) comprennent un actionneur.

5. Vanne de commande d'écoulement (1) selon l'une quelconque des revendications précédentes, **caractérisée en ce que** les deuxièmes moyens de positionnement (21) comprennent un actionneur.

6. Vanne de commande d'écoulement (1) selon l'une quelconque des revendications précédentes, **caractérisée en ce que** les deuxièmes moyens de positionnement (21) comprennent un dispositif passif permettant de créer une force de fermeture pour commuter la vanne de commande d'écoulement (1) vers la position fermée ou de créer une force d'ouverture pour commuter la vanne de commande d'écoulement (1) vers la position ouverte.

7. Vanne de commande d'écoulement (1) selon la revendication 6, **caractérisée en ce que** le dispositif passif est un ressort.

8. Vanne de commande d'écoulement (1) selon l'une quelconque des revendications précédentes, **caractérisée en ce que** la vanne de commande d'écoulement (1) comprend un moyen de guidage (12, 13, 18, 19) pour guider le premier élément de vanne (5) et/ou le deuxième élément de vanne (6).

9. Vanne de commande d'écoulement (1) selon la revendication 8, **caractérisée en ce que** le moyen de guidage (12, 13, 18, 19) comprend un rail de guidage (12, 18) et/ou une rainure de guidage (13, 19).

10. Vanne de commande d'écoulement (1) selon l'une quelconque des revendications précédentes, **caractérisée en ce que** la première surface de régulation d'écoulement (7) forme un angle de 20 à 70 degrés par rapport à la direction de déplacement (10) du premier élément de vanne (5).

11. Procédé pour le fonctionnement d'une vanne de commande d'écoulement (1) comprenant un corps de vanne (2) et possédant une première surface de régulation d'écoulement (7) et une deuxième surface de régulation d'écoulement (8) tournée vers la première surface de régulation d'écoulement (7), la distance entre la première surface de régulation d'écoulement (7) et la deuxième surface de régulation d'écoulement (8) déterminant la plus petite section transversale d'écoulement à travers la vanne de commande d'écoulement (1), dans lequel la vanne de commande d'écoulement (1) est commandée
- à l'aide d'une fonction de régulation de débit, en déplaçant un premier élément de vanne (5) comprenant la première surface de régulation d'écoulement (7) linéairement par rapport au corps de vanne (2) pour régler la distance entre la première surface de régulation d'écoulement (7) et la deuxième surface de régulation d'écoulement (8) afin de modifier la section transversale d'écoulement entre la première surface de régulation d'écoulement (7) et la deuxième surface de régulation d'écoulement (8) dans une position ouverte de la vanne de commande d'écoulement (1), et
- à l'aide d'une fonction marche/arrêt, en commutant la vanne de commande d'écoulement (1) entre une position fermée, dans laquelle les surfaces de régulation d'écoulement (7, 8) sont jointes pour empêcher l'écoulement à travers la vanne de commande d'écoulement (1), et une position ouverte dans laquelle la distance entre la première surface de régulation d'écoulement (7) et la deuxième surface de régulation d'écoulement (8) dépend de la dernière distance déterminée par la fonction de régulation de débit,
**caractérisé en ce que** dans la fonction marche/arrêt, un deuxième élément de vanne (6) comprenant la deuxième surface de régulation d'écoulement (8) est déplacé.

12. Procédé selon la revendication 11, **caractérisé en ce que** dans la fonction de régulation de débit, la distance entre la première surface de régulation d'écoulement (7) et la deuxième surface de régulation d'écoulement (8) est réglée à l'aide de premiers moyens de positionnement (20), et dans la fonction marche/arrêt, la commutation entre la position fermée et la position ouverte est effectuée à l'aide de deuxièmes moyens de positionnement (21).
